# EUROPEAN PATENT SPECIFICATION

(11) **EP 1 388 074 B1**
(45) Date of publication and mention of the grant of the patent: **18.12.2019**
(21) Application number: 02723874.0
(22) Date of filing: 16.04.2002
(51) Int. Cl.: G06Q 30/00, G06F 9/54

(54) **SYSTEM AND METHOD FOR RULES-BASED WEB SCENARIOS AND CAMPAIGNS**
SYSTEM UND VERFAHREN FÜR REGELGESTÜTZTE WEB-SZENARIEN UND -KAMPAGNEN
SYSTEME ET PROCEDE DE REALISATION DE SCENARIOS ET DE CAMPAGNES WEB SUR LA BASE DE REGLES

(30) Priority: 16.04.2001 US 283977 P; 15.04.2002 US 122677
(43) Date of publication of application: 11.02.2004
(73) Proprietor: Oracle International Corporation, Redwood Shores, CA 94065 (US)
(72) Inventor: SMITH, Greg, Westminster, CO 80021 (US); OLANDER, Daryl, Boulder, CO 80304 (US); STAMM, Tom, Louisville, CO 80027 (US); BERGMAN, Robert, Denver, CO 80260 (US)
(74) Representative: D Young & Co LLP
(86) International application number: PCT/US2002/012010
(87) International publication number: WO 2002/084506

(56) References cited:
- WO-A-00/38078
- WO-A-01/14962
- US-B1- 6 182 277
- BENJAMIN N. GROSOF, YANNIS LABROU, HOI Y. CHAN: 'A declarative approach to business rules in contracts: courteous logic programs in XML', 1999, ACM XP002952399 ISBN NO: 1-58113-176-9/99/001 * page 68 - page 77 *
- ANGELA BONIFATI, STEFANO CERI, STEFANO PARABOSCHI: 'Pushing reactive service to XML repositories using active rules', April 2001, ACM PROCEEDINGS OF THE TENTH INTERNATIONAL CONFERENCE ON WORLD WIDE WEB XP002952400 * page 633 - page 641 *
- DONALD KOSSMANN: 'The state of the art in distributed query processing' ACM COMPUTING SURVEYS vol. 32, no. 4, December 2000, pages 422 - 469, XP002952901
- BENJAMIN N. GROSOF AND YANNIS LABROU: 'An approach to using xml and a rule-based content language with an agent communication language' IBM RESEARCH REPORT 28 May 1999, pages 1 - 21, XP002952902

## Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Field of the Invention:

The invention relates to online and particularly to web-enabled systems, and to methods for personalizing an application behavior and content for a user or group of users.

### Background of the Invention:

In the field of e-commerce, there exists a demand for businesses to be able to tailor their products and services to better match the needs and requirements of their customers. This demand exists equally in both the business-to-business (B2B) and the business-to-consumer (B2C) worlds. A particular example of such tailoring of business services is in the field of personalization. Personalization allows a business to personalize, or otherwise customize, their offerings to a particular customer, or group of customers. For example, in an Internet/ Web environment, a B2C content provider may wish to deploy a Web site in which the Web site content is personalized for each individual customer visiting the site, or for each type of customer based on certain characteristics. Examples of such Web-based B2C providers include on-line catalog-providers; product vendors; news, media and entertainment providers; and information or reference sources.

As their business success has come to depend more and more on dependable personalized services, e-commerce providers have demanded more from their personalization systems. A prevalent demand is for personalization systems that can assist a provider in not only providing a personalized Web site, but can allow the e-commerce provider to tailor all of their business functions - marketing, production, distribution, etc. at a single source, and to update the information or data that these functions rely on, in a quick, dependable, and easily-modifiable manner, that requires little or no system down-time.

Traditional systems used for personalizing web content are mostly analytic in nature, and rely on using previously collected data in a manner that allows an administrator to modify a web site or e-commerce application based on an understanding of that data. For example, personalization systems from vendors such as ATG and Broadbase, who primarily provide Online Analytical Processing (OLAP) systems, rely on the commerce provider collecting sufficient by large amounts of data to represent their target population in an analytical way, i.e. statistically, and to then use that data to personalize content to a sub section of the population. Data can be collected by traditional mechanisms, i.e. through standard market research tools, or can be collected on-line through for example, maintaining histories of a customer's prior use. However, such data is typically stored in a repository for further analysis before it is subsequently analyzed and used to allow an administrator to update the actual content. In this manner the data is not used to provide a real-time personalization of the system, or one that is easily modifiable in run-time by an administrator. Instead, the data is used more to present a change in content over a large period of time and a large number of users. No attempt is made to customize data content at the per-user level during the actual user or customer session.

Another example is the Asera Commerce Server (ACS), described in international patent publication number: WO 01/014962 A1. ACS is an Application Service Provider (ASP) that uses an extendable architecture to implement a customer specific business solution. Steps and rules are used to automate business processes customized for the ACS. Such customization typically starts with an initial person-to-person interview with the business to build the framework for the potential applications that will best suit the business. Applications can then be built to meet the business' demands. The ACS is capable of generating working business application solutions in 60 to 90 days. The customized solution is modular so modifications can be made relatively quickly.

As today's e-commerce demands grow to requiring real-time update of personalized user content, and/or available products and services, there is an ever increasing demand for systems that allow an administrator to quickly customize the content that is presented to a user during application run-time, and even when the user is actively operating within a session. Furthermore, systems that allow this change to be effected automatically, i.e. by using rules or some other mechanism to alter the content presented to a user during their session, are especially useful. As end users become more sophisticated, and demand better quality of service from their content providers, and as back-end commerce applications become more complex, and flexible enough to offer such a detailed variation in content, there is an ever increasing demand for systems that allow or support the ability to provide real-time personalized data content to the user. Systems that can do this, while at the same time allowing great ease of use in setting up data content and marketing campaigns, are especially useful, since they allow an administrator to quickly administer the actual content and the rules by which that content will be sent to the user.

### Summary of the Invention:

The invention provides a system and a method as set out in the accompanying claims.

The invention provides a system and a method for allowing an e-commerce provider to customize or to personalize their business functions or content for each customer, group of customers or for a particular type of customer. A simple example of this is in the personalization of a Web site, such that each visiting customer may see perhaps slightly different site content, customized for their particular needs. But the system may be equally used in any business system that would benefit from personalization. As used herein, a user or customer may be an individual or any other entity, such as another organization or company. The business functions the user accesses may not be the type displayed on a screen, but may instead be, for example, automatic style order retrieval and processing and other operations. The invention allows application behavior and data to be personalized at any step in the process, and between any entities.

Generally described, the invention provides a personalization system that uses rules to adjudicate and characterize a customer, or a customer's actions, and then to personalize a business function, such as for example a data communication, or a displayed page, based on the outcome of those rules. Rules may be used to create scenarios - potential series of events that characterize a customer's session. Scenarios may in turn form the basis of campaigns - a set of possible scenarios that have a combined start time and a stop time, within which the customer operates, and within which environment the rules-based system makes its determinations, and provides characterizations and personalizations.

In one embodiment, the invention provides a rules-based system for customizing content of an e-commerce application, comprising: a server for passing information to and from the rules engine, and to and from a commerce application; a ruleset having a plurality of rules, wherein each rule defines a potential situation and a corresponding action; and a rules-engine, for parsing the contents of a ruleset to make informed decisions about the current proceedings and to determine actions.

In the environment of the Internet and/or a website, an embodiment of the invention can be used to display personalized content to a Web user based on their session information. In this embodiments, the Web application used by the user may be, for example, a commerce Web site application such as a on-line booking system, e.g. flight reservations, or product catalog ordering. When the user logs into such an application a session is created and events occur that correspond to that session. These events are used to drive the rules-based engine, which in turn in used to drive the providing of content. Inferences about the user's profile can be made based on the user profile, and rules can be then run against that profile, all of which occur in real-time, and without need the to refer to a secondary personalization source such as a repository of statistical or marketing information.

### Brief Description of the Figures:

**Figure 1** shows a schematic of a rules-based personalization system in accordance with an embodiment of the invention.
**Figure 2** shows an illustration of the operation of a rules-based personalization system in accordance with an embodiment of the invention.
**Figure 3** shows a flowchart of a scenario rules and action process in accordance with an embodiment of the invention.
**Figure 4** shows a schematic of a campaign lifecycle in accordance with an embodiment of the invention.
**Figure 5** shows a model of a scenario interface in accordance with an embodiment of the invention.
**Figure 6** shows a model of a document interface in accordance with an embodiment of the invention.
**Figure 7** shows a model of a campaign service in accordance with an embodiment of the invention.
**Figure 8** shows a model of a behavior tracking listener in accordance with an embodiment of the invention.
**Figure 9** shows a lifecycle diagram of a placeholder determination process in accordance with an embodiment of the invention.
**Figure 10** shows a lifecycle diagram of a campaign deployment process in accordance with an embodiment of the invention.
**Figure 11** shows a lifecycle diagram of an ad service process in accordance with an embodiment of the invention.
**Figure 12** shows a lifecycle diagram of a click-through servlet process in accordance with an embodiment of the invention.
**Figure 13** shows a schematic of an event service behavioral tracking listener in accordance with an embodiment of the invention.
**Figure 14** shows a schematic of a tools framework in accordance with an embodiment of the invention.

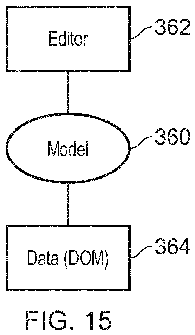

**Figure 15** shows a schematic of the positioning of the editor, data, and model within the tools framework, in accordance with an embodiment of the invention.

### Detailed Description:

The following glossary and definitions of Terms, Acronyms, and Abbreviations will be useful in describing the invention:
- B2B: Business to Business
- B2C: Business to Consumer
- CMS: Content Management Service
- DASL: DAV Searching and Locating (IETF draft)
- DMS: Document Management System
- DTD: Document Type Definition (with XML)
- EJB: Enterprise JavaBeans. A server component architecture for writing Java Server components.
- FIFO: First In, First Out
- I18N: Internationalization
- J2EE: Java 2 Enterprise Edition
- JSP: JavaServer Pages - A J2EE component for generating dynamic web page content.
- JNDI: Java Directory and Naming Interface. A protocol standard for looking up objects and resources.
- OOTB: Out Of The Box
- RDBMS: Relational Database Management System
- SPI: Service Provider Interface
- TagLib: A JSP tag library that contains JSP tag definitions.
- WLS: WebLogic Server
- UUP: Unified User Profile
- XML: Extensible Markup Language

The invention provides a real-time rules-based personalization engine that can be used to personalize and customize business functions, application, or information content for delivery to a customer or a user of the system. In the context of this invention, the customer or user may be an individual, for example an individual user of a web site, or they may be another organization that uses interactive or automatic mechanisms to communicate with the system. As the user interacts with the system, events are generated which are used to drive the rules-based engine. In accordance with the particular rules used, the personalization engine determines in real-time, which content or information should be transmitted to the user. For example, this content may be the particular information a user sees on a web site display, or it can be some other form of data communication, for example, data automatically communicated to a Wireless Application Protocol (WAP) device or a Personal Digital Assistant (PDA) device that is not necessarily seen by the user. In accordance with one embodiment of the invention, XML files are used to configure the working of the rules-based engine, allowing the administratorto quickly and easily modify the operation of the rules-based engine by simply editing the text of the XML files. Since the rules-based engine can be used to control business functions other than the mere display of data on the screen, the invention provides organizations with an ability to personalize their business functions and applications for each customer, or type of customer.

The operation of the personalization system is made easier by the use of campaigns and scenarios. As used in the context of this invention, a scenario is a set of events that will cause a particular rule to be triggered and the corresponding action, business function, or data to be displayed. A campaign may include many scenarios, and provides an easy mechanism by which an administrator can control an entire set of scenarios to best reflect the needs of a particular user of group of users.

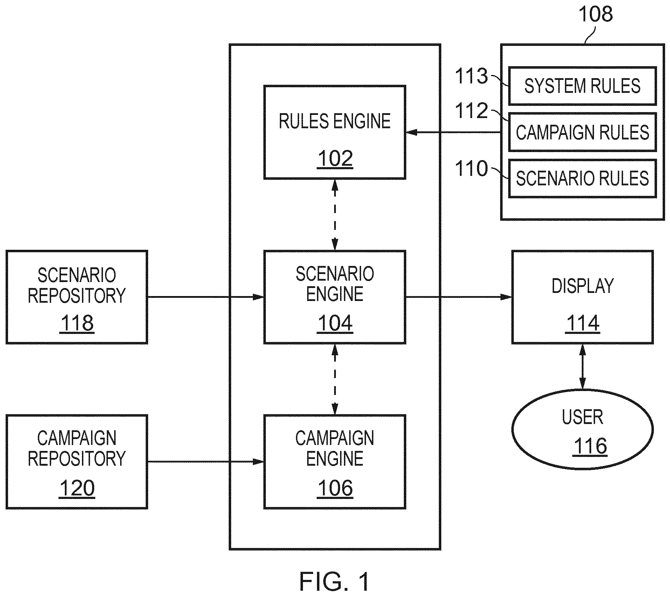

**Figure 1** shows a schematic overview of a personalization system, as it may be used with one embodiment of the invention to provide personalized content to a user, for example, in a Web environment. As shown in **Figure 1****,** a rules engine **102** interprets rules **100** defining scenarios **110** and campaigns **112,** to select a particular set of scenario and campaign settings, for use in displaying content to a user. The scenarios **118** and campaigns **120** can be stored for later activation when needed. Rules are used to define the operation of the rules engine **102** (and optionally separate scenario engine **104** and campaign engine **106,** although it will be evident that the function these two latter engines can be performed solely by rules engine **102**) and particularly to tell the rules engine which scenario and which campaign of a set of variable scenarios and campaigns should be used in selecting and generating the content for display **114** to the user **116.**

### Rules-Based Engine

The centerpiece of the invention is a rules-based engine. The rules-based engine utilizes rules to make informed decisions about the current proceedings and to determine actions therefrom. Each rule defines a situation (an "if" clause) and an action (a "then" clause). The use of such rules allows a flowchart style chaining of situations and actions into a scenario. The rules are stored within a ruleset, or within a plurality of rulesets. As used herein, a ruleset is a collection of related rules, bundled so that the rules engine can use them together. Rulesets, and rules, are used to direct the flow of events within scenarios and campaigns.

In accordance with one embodiment of the invention, rules may be written in an XML format for ease of portability between systems. Additionally, the XML schemas may be parsed in real-time, allowing for the real-time modification of the rules (and of the business workflows) without requiring any system down-time. Furthermore, since a user's characteristics or profile can be calculated by a series of rules, the system provides a mechanism by which a real-time "snapshot" of a user can be generated on demand, and can be used to provide personalized content or services for that user.

### Scenarios

A scenario is a chain of conditions and actions. The scenario describes a flowchart of possible interactions with a user. A campaign uses a set of such scenarios to achieve a business goal for a sponsor or to address a particular business function. In the context of a Web-site or a similar B2C application, campaigns may use on-line ads, email, and consumer discount promotions, through the scenarios, to achieve these goals.

Scenarios represent abstract functionality. However, scenarios used within the context of a campaign may be built on top of any business-to-business, business-to-consumer, or e-commerce platform, such as the range of WebLogic application server commerce server products from BEA Systems.

In accordance with one embodiment scenarios are individually named and maintain a list of classifications for which each scenario is valid. Through a scenario engine, a particular scenario can be searched for based upon such criteria as Name, Description, or types of Classifications. The search may include both whole-word matching and pattern-matching (e.g. description like '*superbowl*'). The results of the search is the names of those scenarios that match the search. During real-time delivery of context the system can quickly match the current situation to a shared scenario and react accordingly.

The scenario engine acts as a scenario definition repository. The scenario definitions may be stored in XML format for ease of use in editing, although other formats can be used. The scenario engine may also return XML definitions of scenarios, by name and can deploy scenarios given a scenario definition.

Scenarios are comprised of a ruleset with constituent rules. Each rule defines a situation (an "if" clause) and an action (a "then" clause). The use of the rules allows the flowchart style chaining of situations and actions into a scenario.

Possible inputs ("if's") into the scenario ruleset include, but are not limited to:
The user's individual properties;
The results of executing a net of Classification rules;
The user's current session and request information (this may include for example their ShoppingCart, or their page location);
An Event that takes place during the session;
The current Time; or,
A random number (to allow the system to undertake probability-based calculations).

Using a scenario rules editor, a system user (typically a systems administrator for example) is able to write custom rules against any inputs, including for example, against the user profile, against the contents of the user's session (specifically the shopping cart), against the user's current request information (browser type, page location, etc.), against certain user historical events (e.g. shopping history), against the event type, headers, or body (the text body in a TextMessage, etc.) The possible outputs ("items") from the ruleset includes an Action definition, (ActionDef) to execute, i.e. one or more actions which the system must take to respond to the input. This may include delivering a particular type of content.

Scenarios are valid only for certain user classifications (i.e. customer segments).

The rules engine does not execute any functionality itself (i.e. it does not generate Actions, such as posting Events, etc). Instead, identifying objects are passed out from the rules engine to the scenario engine, which then performs the required action according to its scenario repository.

In normal use the evaluation of a rule will assert an ActionDef. The action will cause something to happen, or to be displayed to the user. The user will do something that will cause an event. The event will be sent to the scenario engine and the cycle will repeat until, possibly, an end state is reached.

### Campaigns

A campaign is a sponsored set of scenarios designed to achieve a particular goal. In a marketing context the campaign may be designed to promote a certain range of goods for a certain period of time. Other campaigns are more general in that they merely include a set of (typically related) scenarios which the company or organization currently wants in effect. Each campaign is associated with one or more scenarios. Campaigns can be marked as either active or inactive, and typically have a designated date/time at which they start and stop. Through the campaign engine, campaigns can be searched for based upon such criteria as, Name, Start and/or stop time, Classifications (via relationships to scenarios), Sponsor name, Description, Value proposition, Goal description and Active state.

The search may include both whole word matching and pattern matching (e.g. description like '*superbowl*'). The results of the search is the names of those campaigns that match the search. The scenarios related to the campaign can then be retrieved via searching on the scenario engine.

The campaign engine acts as a campaign definition repository. As with the scenario definitions, the campaign definitions may be stored in XML format. The campaign engine can return XML definitions of campaigns, by name, and can deploy campaigns given a campaign definition.

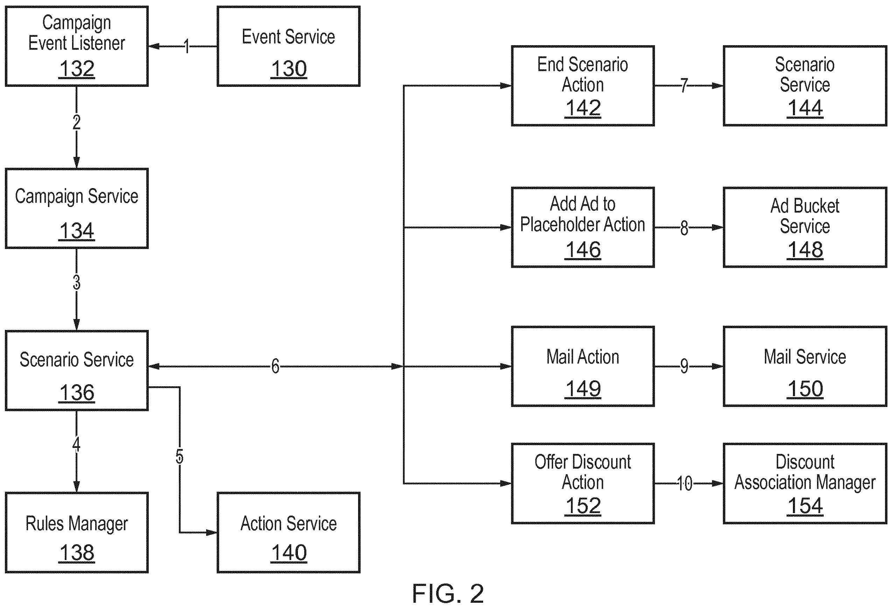

**Figure 2** illustrates how campaign scenarios and rules are used together to provide a personalization system in accordance with an embodiment of the invention. As shown in **Figure 2****,** an events service **130** is used to receive a particular event and to pass notification of this event to a campaign event listener **132.** Events are the driving force that are used to trigger real-time changes within the rules engine that in turn determine the output given to the user. For example, an event may be a user login event, or in the case of a web application a request from the user to select a particular page or to submit a certain type of form. Events need not necessarily trigger rules to take effect, since some events can be purposefully ignored by the events service. The campaign event listener **132** can also be used to filter out certain event types, passing the event to the campaign service **134** for further processing. The campaign service **134** loads the currently active campaigns, i.e. those campaigns specified by an administrator or being currently in place. If the event it receives is from a particular campaign then the campaign service loads that campaign. It then uses this campaign information to build a map of campaign scenario ids and to pass this information along to the scenario service **136.** The scenario service **136** acts as a subset of the campaign service **134,** and is used to filter out scenarios for which the user has reached an end state. If the user has reached an end state, then this implies there is no further work to be done on the part of the system and it is up to the user to determine the next step. However, when the user has not reached an end state the scenario service loops to determine if the event type is valid for the particular set of scenario rules in effect. If it is not valid then the scenario may be ignored. If additional customer segments are needed the scenario service can also be used to execute a segments ruleset. The scenario service may also be used to execute the scenario ruleset and get a list of action definitions. In order to perform this processing the scenario service **136** uses rules from the rules manager **138** to determine the rules in effect for that particular scenario. Each rule typically specifies at least one or more action definition. For each action definition from each scenario, the scenario service gets the action object from the action service **140.** As it runs each action object, and depending on the actual implementation different events may occur. For example, as shown in **Figure 2** these events may also compel such actions as the end scenario action **142,** which uses the scenario service **144** to set an end state on the user for that campaign scenario; the ad placeholder action **146,** which uses the ad bucket service **148** to put an ad query in the user's bucket; the mail action **148,** which uses the mail service **150** to batch an email to the user for later sending; and the offer discount action **152** which uses the discount association manager **154** to give the user a discount on their session. While the examples shown in **Figure 2** illustrate a variety of features and services that can be provided by the invention, it will be evident to one skilled in the art that the event examples shown are not intended to be exhaustive, but are merely illustrative of the types of events, scenarios and services that can be used with the invention. It will be evident that other types of rules, events and appropriate services can be added to best suit the needs of the particular organization or e-commerce application.

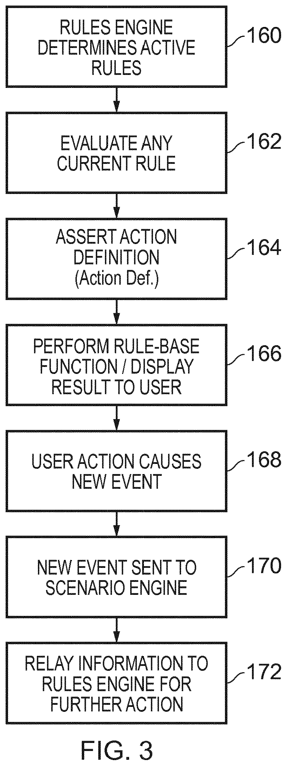

**Figure** 3 illustrates a flow chart of a typical process that may be used by one embodiment of the invention to provide real-time personalized content for a user or a customer of the system. As shown in **Figure 3****,** in step **160,** once invoked the rules engine determines a particular set of rules for use in this situation. In step **162** the rule is evaluated using an "if then" clause, in which the system reads the current state of a user's session i.e. the "if" portion, and determines from the set of potential scenarios what the output should be. In step **164** this output is asserted as an action definition, which determines how the system should respond to this particular user in this particular context, i.e. what action it should take. In step **166** the output, if any, is displayed as a result to the user. As will be evident, the system could decide to do some other action that does not effect the display but communicates data or alters some business function or application in some other manner. At step **166,** at any later point in time, if the user through their actions causes an additional event to occur then, in step **170,** this event is sent to the scenario engine (or rules engine id a single engine is used). In step **172** the scenario engine relays information back to the rules engine, for use in subsequent rule determinations, that will determine how this system should respond to the subsequent event.

### Campaign Goals & Activation

Campaigns can use goals in two ways. A goal is a textual description that can be used to better clarify the purpose of the campaign. Secondly, a goal is a quantitative measurement that can be achieved by a campaign. In accordance with one embodiment, all campaigns have an is-active rule, which receives the following inputs:
The campaign data object;
Access to ad exposure and click counts;
The event; and,
The current date and time.

The output of the is-active rule is either a True or False. True indicates that the campaign is currently active. False indicates it is not active and that no additional processing will take place. There is a mechanism to deactivate a campaign, regardless of the campaign activation criteria the campaign can always be activated or deactivated by an administrator. This status is first checked before evaluating the activation or scenario rules. Additionally, campaigns can have start and stop times that determine a campaign's active state.

### Campaign Lifecycle

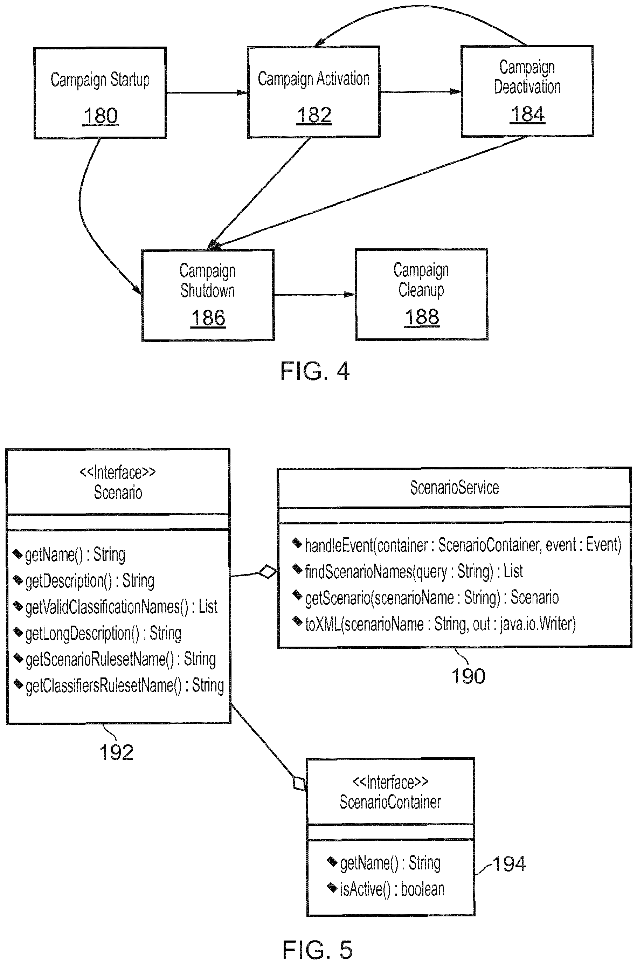

**Figure 4** illustrates the process by which a campaign is added or removed from the runtime environment. The Campaign must first be started **180.** This typically occurs when it is first deployed, although the startup could be delayed until a manual process occurs. Some embodiments of the invention may allow per-scenario startup rules to be specified. At startup, these per-scenario startup rules of the campaign are fired. The inputs are the campaign data object and the current time. The outputs are the action definitions (ActionDefs) to execute.

After the campaign has actually been started, it subsequently becomes active **182,** generally based upon the start time of the campaign, or by explicitly marking it as an active campaign. Anytime after first becoming active, the campaign can become or be marked as inactive **184,** either by reaching the campaign's predetermined stop time, the campaign's goals being met (i.e. an "is-active if" rule), or by an administrator deactivating the campaign. After being deactivated, the campaign can in some instances become active again, generally by the administrator modifying it, redeploying it and marking it active.

In some embodiments, at any point after starting up, the campaign can also be shutdown **186.** This is generally a manual process performed by an administrator. During shutdown, all of the per-scenario shutdown rules are executed. The inputs to these rules is the campaign data object and the current time. The outputs should be the action definitions (ActionDefs) for the campaign engine to execute. These actions should typically undo any of the actions from the startup rules, although there is no mandatory requirement to do so.

After the campaign has been shutdown, it is cleaned up 188. This involves removing all campaign related data (e.g. ad exposure counts, scenario state information, etc.). It may also involve removing the campaign definition from the campaign engine repository.

### Reporting / Analytics

Campaigns are driven by events. Additionally, ad exposure and click-through counts are maintained by the campaign service for campaign usage. These can also be accessed for reporting.

### ActionService

The action service abstracts the notion of an action which the scenario engine is supposed to execute, based upon the results of a ruleset. This allows the rules to assert a generalized definition of a concrete action. This ActionDef can be used to gain access to an object which can then execute the underlying action. New Actions can thus be created and deployed without restarting the server. One way to do this is to deploy a Session EJB which can serve up the concrete Action objects.

An Action repository is available to the scenario tool. In one embodiment this action repository can be described by an XML document. The scenario tool uses this to dynamically display the action to the user, and to gather all of the parameters to the action from the user. A predefined set of Actions for campaigns may include the following:
Place an ad group (query) in a user or global placeholder with a weight.
Remove an ad group (query) from a user or global placeholder.
Offer the user a named discount.
Generate an email for the user from a URI with a Subject.

### Placeholders

A placeholder represents a position within a Java Servlet Page (JSP). The behavior of the placeholder is determined by the particular system configuration. This is very similar to the scenario's Action concept. However, the behavior of the placeholder is very much request-driven, not event-driven. In typical implementations, a request will come in at a web page from a web user for a JSP page that contains a placeholder JSP tag. The tag contacts a session EJB that will return an object describing the behavior that should occur. The behavior can optionally be a displayable unit. In the case of a displayable unit, the displayable unit will include a renderer object which knows how to display the unit.

### Ad Placeholders

In those environments that use the invention for ad generation, placeholders can be used to display ads. For placeholder behaviors that display ads, an ad bucket for a user for a placeholder is used. The ad bucket contains a set of ads or ad groups that should be displayed to the user, plus a bucket-entry based view count. Each entry in the bucket has the following information: User name; Placeholder name; Date and time entered; Ad query (defined the ad or ad group to display); Weight; View count; Campaign name; Scenario name.

In some implementations there can be an ad bucket for each placeholder that is not tied to a particular user (i.e. a global-user bucket). Otherwise, each entry in the bucket will have the same information.

Because an ad bucket might be populated externally from the placeholder request (i.e. by the campaign/scenario engines), an ad bucket conflict resolution mechanism can be used. This conflict resolution mechanism determines which entry in the user's ad bucket will actually be used to find an ad to display. In one embodiment, the weight of the valid bucket entries is used. A bucket entry is valid if its corresponding campaign is currently active or it is not associated with a campaign. A single entry's weight will give it a (weight * 100 / (sum of all weights)) percent chance of being viewed. A random number is used to determine which bucket entry will be used. For example, if there are four entries in the bucket with weight 1, 2, 3, and 4, then the layout might be for example:

| Entry | Weight | Formula | % chance used |
|---|---|---|---|
| Ads1 | 1 | (1 * 100) / (1 + 2 + 3 +4) | 10 % |
| Ads2 | 2 | (2 * 100) / (1 + 2 + 3 +4) | 20 % |
| Ads3 | 3 | (3 * 100) / (1 + 2 + 3 +4) | 30 % |
| Ads4 | 4 | (4 * 100) / (1 + 2 + 3 +4) | 40 % |

Once the entry has been determined, the entry's query is executed to result in a set of ads (i.e. an ad group). Each ad in the group will have its own weight. A similar algorithm will be applied to determine which ad from the ad group to use. If something occurs to cause the ad group size to be zero, the system will choose a new bucket entry to use, ignoring the previously selected bucket entry. If there are no user bucket entries, a global-user bucket will be checked in the same fashion. The global-user bucket will generally be populated via campaign startup rules.

In one embodiment of the invention for use with Web-sites having advertisements, the display a particular ad to the user can generate an event, as will the click-thru of an ad. In both cases, the ids of the campaign and scenario that placed the ad into the ad bucket are passed along with the event. This enables the system to tie "See" and "Click-thru" events back to both the ad and the campaign, for subsequent analytical and reporting purposes.

### Ad Service

The ad service provides ad metadata and content for subsequent display to the user. The service is able to retrieve an ad based upon its unique identifier or based upon a search against ad metadata. Ads may include for example: a single image with an optional click-thru URL, alternate text, border specification, width, height, and mouse over text; a block of HTML text (which can contain a click-thru URL), plus any of the supplementary media referenced by the HTML block; or a reference to in-line a JSP page.

All ads have an associated relative weight, which can be an integer number. The weight of a particular ad is used to resolve ad display conflicts.

In one embodiment, the ad service keeps track of the following ad impression (what a user sees), and click-thru event counts per ad: Global count; and, Per-campaign count.

This information is used to handle the campaign goal evaluation. It could additionally be used in reports. Per-user ad counts can be handled through the event service.

In some embodiments, there can be a mechanism to query the ad service to view, increment, and decrement the counts. This information is then used immediately by the campaign and scenario engines and so must be retrievable at the above levels of detail.

### Email Service

An email service can be used to support email based campaigns. Email based campaigns allow the system to direct personalized email content to a user or group of users. In one embodiment the email service supports two modes of operation based upon configuration: batch mode or pass-thru mode. Pass-thru mode causes the service to immediately send the email request. Batch mode causes the service to store the email request to a datastore from where it can be sent at a later time. An administration interface or a command-line program can be used to fire off batched emails. The information required by the email service is: the standard email header information (e.g. To, From, Subject), the MIME email header information (e.g. Content-Type, Content-Length, Content-Disposition, some of this might be determined from the email body), the body of the email, the ids of the campaign and scenario which initiated the email, and how long the email is valid (i.e. if it hasn't been sent in 5 days, don't bother)

### Deployment of Campaigns and Scenarios

Campaigns and scenarios must be deployed to the server before they may operate. In one embodiment a servlet capable of passing XML definitions to the appropriate service for deployment can be used.

The Campaign and Scenario Services take their input from XML files that may in turn be generated by a set of administrator tools. Schemas for Campaign and Scenario definitions are used, as well as a schema for Scenario Rules.

An administrator can use these administration tools to create and deploy Campaign and Scenario definitions. The tools generate XML files that represent these definitions, and deploy the new definitions through a deployer servlet. This servlet accepts a stream of XML data and calls the appropriate services to handle the data. Campaigns, Scenarios, and their associated Rules may be deployed separately. Normally the rules will be deployed first, followed by the scenarios that use them, and then finally the campaigns that are made up of the scenarios. When a campaign or scenario is "deployed", the associated service persists the XML definition in a central database or repository.

### EJB Implementation

The services described above may be implemented as a set of stateless services - in one embodiment, for example, as a set stateless session beans conforming to the Enterprise Java Bean (EJB) specification. The sections below detail an implementation of the invention that utilizes EJB's to provide the services and functions necessary to support the scenarios and campaigns. It will be evident that other types of resource can be used, instead of or in addition to EJB's.

### Scenario Service

The Scenario Service is designed to allow a flow of interactions between the system and a user to be defined as a set of rules and actions.

### Scenario Session Bean

The Scenario Service Session Bean is the external interface to scenario functionality. When an event is received by the Scenario Service, it determines if any scenarios in the system should react to the event. If so, the service passes the event on to each scenario that is interested, and then lets them run their rules on the information contained in the event. This session bean also provides functionality to redeploy scenarios and export existing scenarios as XML.

### Scenario Objects

A Scenario acts as a wrapper around a RuleSet that contains some additional business logic. When a scenario receives an event from the Scenario Service, it will first do a check to make sure that the Event is meaningful to the scenario. If not, then the scenario will return immediately. Otherwise, if it is meaningful it will pass the information contained in the event to the Rules Service, along with the RuleSet contained in the scenario. Scenario rules produce Action Defs as they fire. After executing the RuleSet, the scenario will use the Action Service to execute the resultant Action Def Objects, if any. This prevents the actions produced by the rules from executing within the Rule Engine thread.

### Action Objects

When a Scenario runs a set of rules against an event that it has received, some sort of action will usually be executed as a result of these rules. To accomplish this, the rules create, initialize, and ActionDef objects. These objects must be initialized with the name of the Action they represent, and a map of parameters that the Action will need to run. They are responsible for instantiating the actual implementations of the Action interface, which will do the actual work. This interface comprises of an init method that takes a map of named parameters, and a run method that will execute the action. The rule designer to instruct the rules engine to correctly initialize the ActionDefs with data from the event, the current user, or any other available resource. For example, a Scenario that sends email will contain a rule that returns an ActionDef, initialized with a map of appropriate parameters such as the recipients email address and the text of the message, and the name of the Action, SendEmailAction. After the rules are finished executing, the scenario will make the returned ActionDef object retrieve the actual Action implementation. When the run method is called on the Action, it will use the initialization parameters to accomplish its task, which in this case is invoking an email service to send the message.

### EJB Ad Service

The Ad Service provides ways to retrieve ads based on the current user of the system. It consists of an AdBucketService session bean that is responsible for managing which ads should be displayed for which users, and a lower level AdService session bean that acts as a pass-thru to the content management service.

### Ad Bucket Service

The AdBucketService is a stateless session EJB that provides ad content to placeholders. This is done by looking at ads which target the placeholder and creating a set of valid ads. This set is then passed to an AdConflictResolver which picks the actual ad to serve and updates the ad information. The ad query from this is passed to the AdService to choice the actual ad. If no valid ad is found, then a global ad bucket is checked for ads. The AdBucketService also provides a method to add an ad to a users ad bucket. This is usually called when an event from a Scenario causes an AdAction to be fired. It also provides an interface which will allow campaign state to be cleaned up. More generally, the interfaces will remove content from user buckets based upon the name of a Scenario Container. A campaign is just one implementation of a Scenario container.

### Ad Info

The Adlnfo is a data struct that contains some subset of the information entered into the Database. Database Table entries for user ad information may include the following:
username -- The name of the user;
placeholderName - The name of the placeholder that the ad will target;
scenarioContainerName - The name of the scenario container (Campaign) that generated the ad;
enterDate - The date/time the ad was entered;
adQuery - A query passed on to the AdService to generate the actual content for the ad;
expirationDate - A date the ad expires;
weight -- weight and viewCount are used to choose the add;
viewCount - ; and,
scenarioName - The name of the scenario that added the ad to the campaign.

### AdConflictResolver

The AdConflictResolver is responsible for choosing the "best" ad to display to the user and updating the ad in the database. This method applies an algorithm to a set of ads to choice the "best" one to display. It then updates the weight and viewCount based upon the algorithm.

### AdService

The ad service is a separately deployed stateless session EJB which implements the DocumentManager interface and delagates to a DocumentManager. Ad objects may be Document objects deployed in a DocumentManager.

### Click-Thru Servlet

This servlet is used to track ad click-through events. The content output of the from the AdBucketService will wrap the ad and direct it two this Servlet. The ClickThruServlet is the central place to record user clicks on ads. This may cause campaign events to be raised. The Servlet will redirect the user to the target page after processing the click thru event.

### EJB Placeholder Service

A Placeholder represents a named location in a JSP page where content can be placed by the commerce server. It is represented by a placeholder JSP tag. Behind the placeholder tag is the PlaceholderService, a stateless session EJB. The PlaceholderService is responsible for passing content back to the JSP page.

The content is retrieved from a content handler EJB which implements the ContentBucket interface. A content handler is registered with the named placeholder when the placeholder is defined.

### PlaceholderTag

The PlaceholderTag is used to place content from the placeholder service into a JSP page. The placeholder is a named entity. The placeholdertag defines four attributes including: name -- The name of the placeholder within the system; height -- An optional height for the content; width -- An optional width for the content; and renderer -- An optional named EJB that can transform the content output from the ContentBucket before passing it back through the PlaceholderTag.

### PlaceholderService

The PlaceholderService is a stateless session EJB whose primary responsibility is to return content to the PlaceholderTag. In addition, it provides method for the define placeholders, and query for placeholders. The query method can be used by tools to create drop down lists, etc. A define placeholder method defines a new placeholder for the system. The name must be unique and the contentBucketName must be a EJB that defines the ContentBucket interface. Placeholders will be defined within a database table that contains the following information: name -- a unique name for the placeholder; type -- the name of an EJB that represents the ContentBucket producing; and content for the placeholder.

### ContentBucket

The ContentBucket interface defines an interface which the PlaceholderService uses to receive content. This interface will be implemented by "Buckets". The DiscountBucket also is a content bucket.

### ContentTransform

This is an abstract base class that implements a transform of the output of a ContentBucket before passing it back to the PlaceholderTag, and acts as a connection point where the system may perform XSLT type transformations to the output of a ContentBucket.

### EJB Email Service

The Email Service session bean is a generic platform-level service to provide the ability to send email. It provides real-time email capabilities, as well as batch email capabilities. In the simplest case, an email can be sent by providing a "to" address, subject, and message text. A default "from" address can be specified in the server configuration.

### Email Batching

The Email Service also provides the ability to batch a set of emails to be sent later. In the context of a Campaign, this can be used to gradually accumulate emails about a promotion or special offer as users generate events, and then send them all at once when the promotion starts. A batch of emails may be identified with a string id. In the context of a Campaign, this might be the name of the Campaign. Each batch will have a date to determine when it should be sent, or possibly a range, so that emails added to a batch before the start date will be batched, and emails added within the date range will be sent immediately.

### EJB Campaign Service

The Campaign Service is the highest level service covered by this document. A Campaign is a sponsored set of scenarios designed to achieve a goal.

### Campaign Service Session Bean

The Campaign Service Session bean is the interface between campaigns and the rest of the system. It implements an EventListener interface so that it can receive events that should be processed by the scenarios that make up a campaign. This session bean also provides functionality for tools to deploy new campaigns, and retrieve campaign definitions as XML.

### Campaign Object

A campaign contains a set of Scenarios, as well as some information about the campaign itself such as a start and end date.

### Campaign Bootstrap

In some embodiments, a campaign may also contain a bootstrap rule that will be executed when the campaign is deployed OR when the server starts up. This bootstrap rule can do things like place entries in the global ad bucket so that users can be shown ad content for the campaign without needing to trigger an event that is recognized by one of the campaign's scenarios.

Part of a campaign definition is a set of date-time and time ranges for which the campaign is active. These ranges can also be negative; for example, there can be a date range from December 18 - December 25 and an inactive time range of 8am - 11am. This would cause the campaign to consider itself active between the 18th and 25th of December, but not between the hours of 8am -11am. Part of the first "isActive" call to a campaign will be to check these date ranges against the current date/time so that the call can be short-circuited without firing up the rules engine.

Additionally, in some embodiments an activation rule can be defined for a campaign. The activation rule can return either true or false, and will be called after the active date range is validated. This provides an alternate method of short-circuiting the call prior to running all the rule sets that belong to the campaign's scenarios. The activation rule also provides a way to stop the campaign from executing once a "goal" is met, by having the rule check for the goal condition, and return false if it has been met.

### Receiving an Event

When a campaign receives an event through the Campaign Service, it will first check to make sure that it is active by looking at its start and end date range, as well as any defined time ranges, and then possibly running its activation rule. If either of these checks fails, the campaign is considered inactive, and will not execute further. If the campaign determines that it is active, it will pass the event to each of its scenarios, so that they can all act on the event by running their rule sets, and executing any actions that result from that.

### Cleaning Up After a Campaign

In accordance with one embodiment, campaign definitions can also include a "cleanup rule" that will be executed when the campaign is undeployed. This will give the campaign a chance to delete any information that may have been created during its run, like ad queries in ad buckets. Like the rules in a scenario, this rule will return zero or more Action objects that can be executed to do the cleanup. It will be evident that alternative methods of cleanup can be used.

### Deployer Service

The interface to the deployer component is the DeployerServlet. This is a standard servlet that will accept a stream of XML, which contains data to deploy, and route that stream to an appropriate helper class. The servlet's configuration information will contain information mapping XML document types to implementations of a DeployerHelper interface. When the servlet receives the XML data stream, it will examine the document type, and instantiate the correct DeployerHelper implementation to handle it. Each DeployerHelper implementation will know how to deploy the data from the XML stream. This is up to the individual component; it could be calling a session bean to handle the actual deployment, or it could be entering the data in the database directly.

### EJB Event Service

The campaign and scenario have a requirement to have potentially synchronous event handling, in addition to asynchronous event handling via JMS. In the Event property set type, the name of each property set will correspond to an Event type. This mechanism will allow the editors to be extended as we or our customers add new event types. The following Event types and property set are supported, although it will be evident that additional Event types can be supported within the scope of the invention as set out in the claims:

**Login Event**

| Property Name | Type | Description |
|---|---|---|
| user | User | The user who logged in. |
| userId | String | The Id of the user who logged in. |
| applicationBase | String | The base URI of the application (e.g. "/portal/application/exampleportal"). This might be null |

**Loqout Event**

| Property Name | Type | Description |
|---|---|---|
| user | User | The user who logged in. |
| userId | String | The Id of the user who logged in. |
| applicationBase | String | The base URI of the application (e.g. "/portal/application/exampleportal"). This might be null. |

**Ad Impression Event**

| Property Name | Type | Description |
|---|---|---|
| user | User | The user who logged in. |
| userId | String | The id of the user who logged in. |
| campaignName | String | The name of the campaign the ad was displayed for. |
| scenarioName | String | The name of the scenario the ad was displayed from. |
| adId | String | The identifier of the ad. |
| placeholderName | String | The name of the placeholder the ad was displayed in. This might be null. |

**Ad Clicked Event**

| Property Name | Type | Description |
|---|---|---|
| user | User | The user who logged in. |
| userId | String | The id of the user who logged in. |
| campaignName | String | The name of the campaign the ad was displayed for. |
| scenarioName | String | The name of the scenario the ad was displayed from. |
| adId | String | The identifier of the ad. |
| placeholderName | String | The name of the placeholder the ad was displayed in. This might be null. |

**Checkout Event**

| Property Name | Type | Description |
|---|---|---|
| user | User | The user who logged in. |
| userId | String | The id of the user who logged in. |
| shoppingCart | Shopping Cart | The user's shopping cart object at the time of checkout. |

**Add to Shopping Cart Event**

| Property Name | Type | Description |
|---|---|---|
| user | User | The user who logged in. |
| userId | String | The id of the user who logged in. |
| item | ProductItem | The ProductItem added |
| quantity | Integer | The number added |

**Remove from Shopping Cart Event**

| Property Name | Type | Description |
|---|---|---|
| user | User | The user who logged in. |
| userId | String | The Id of the user who logged in. |
| item | ProductItem | The ProductItem removed. |
| quantity | Integer | The number removed |

### Typical Implementation

The following section describes a typical implementation of a personalization system in accordance with one embodiment of the invention. It will be evident that alternative implementations can be used within the scope of the invention as set out in the claims.

Figure 5 shows a model diagram of one implementation of the scenario service that illustrates how the scenario service can access scenarios using either the name or search pattern. As shown in Figure 5, the scenario service includes a mechanism for handling events, and for finding scenarios or retrieving scenarios by name, the scenario service **190** uses a scenario interface **192** to look up or save scenarios by name, description, classification name, long description, scenario ruleset name, or classifier ruleset name. An XML interface allows the scenario service to read scenarios from an XML file, and to save modified scenarios to an XML file. A scenario container interface **194** is used to specify whether a scenario is active or not.

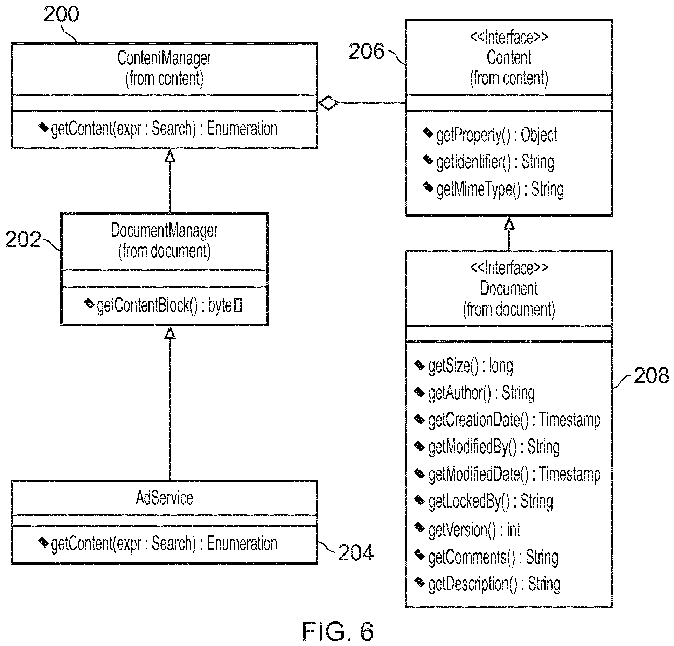

**Figure 6** illustrates how the content manager is used to provide content to the user in one embodiment in the invention. As shown in **Figure 6** the content manager **200** retrieves data input from a document manager **202** and an ad service **204,** using a content interface **206.** A document interface **208** allows additional information about the document to be saved and/or edited including the author version number, etc.

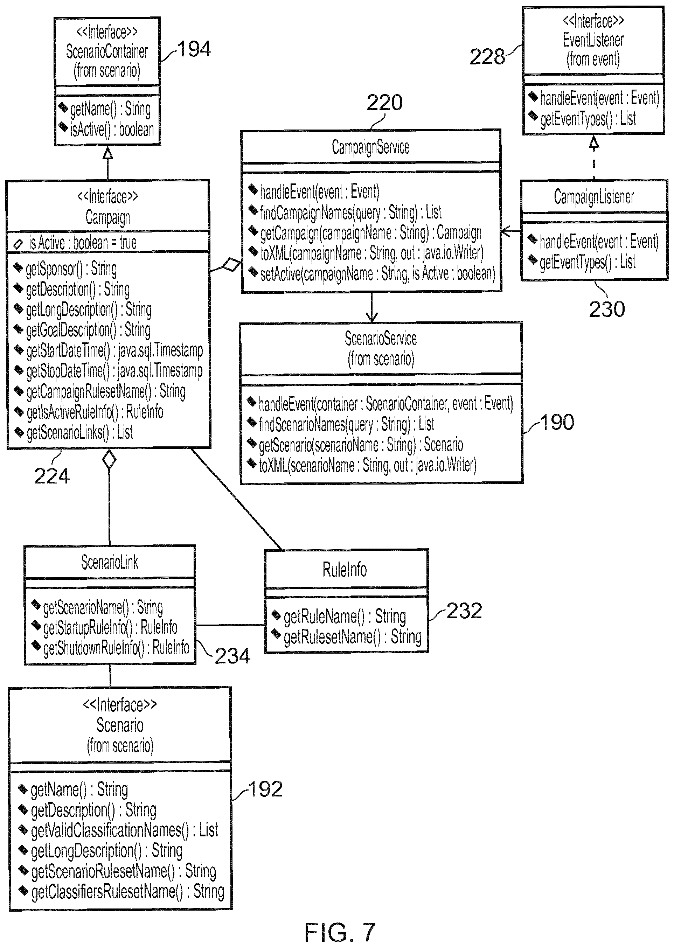

**Figure 7** illustrates a model of one implementation of the campaign service that is used to respond to events as they happen. As shown in **Figure 7****,** the campaign service **220** and the scenario service 190 use information from the rulesets via a campaign interface **224** feed information to the scenario container **226** for use in displaying content. An event listener **228** feeds information about happening events (re login, page hits, click-through, etc) to a campaign listener **230** for use by the campaign service **220.** The campaign interface **224** uses rule information **232** and a rules-based scenario link **234** to access the scenario interface **192.**

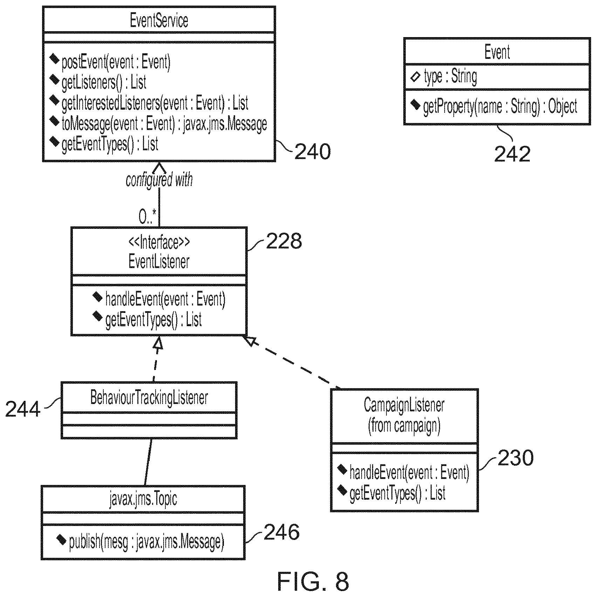

**Figure 8** shows a model of a event service **240,** that uses an event listener interface **228** to receive notification of events **242.** This information is intercepted by the campaign listener **230,** to determine events of current interest to the system and the present user. In one implementation the event service can be modified by a behavior tracking listener **244** which uses information on a user's behaviorto help determine the possible event types that will be monitored. A standard Java JMS method **246** can be used to publish events to the behavior tracking listener **244.**

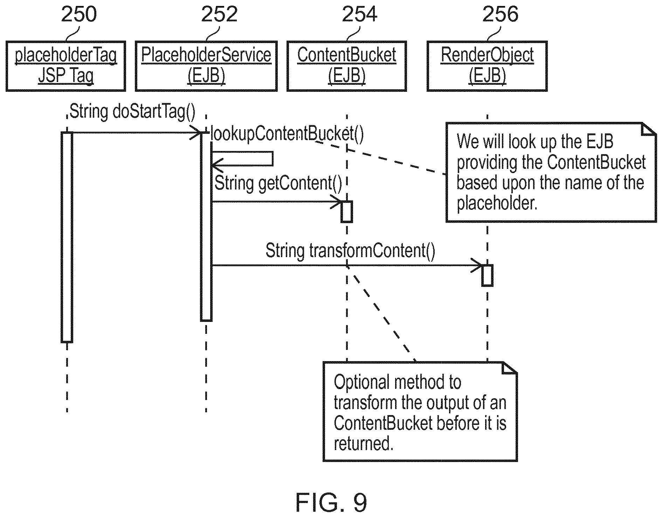

**Figure 9** illustrates a lifecycle showing how in one embodiment a placeholder tag can be used to retrieve content for subsequent display on the user's screen. As shown in **Figure 9****,** when the placeholder tag or JSP tag **250** on the user's screen is activated it causes a call to be made to the placeholder service EJB **252.** The placeholder service EJB in turn makes a call to the content bucket **254** based upon the name of the placeholder, followed by a request to get content. This content is then returned to the user by typically as a display on the user's screen. An optional request to a render object EJB **256** can be made to transform the output of the content bucket into some other format before it is returned or displayed to the user.

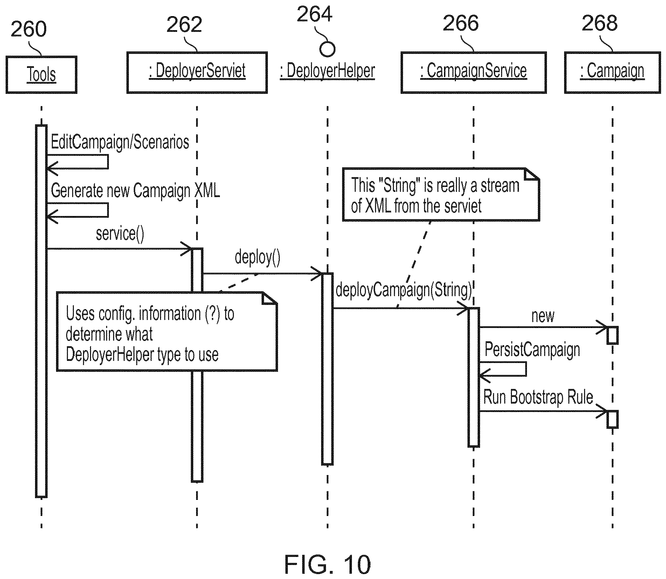

**Figure 10** illustrates a lifecycle that shows how administrative and editing tools (including graphical user interfaces) can be used to edit campaigns and scenarios, and then to deploy the campaign at the campaign service for use in the subsequent personalizing of data on Web content for the user. As shown in **Figure 10****,** tools **260** can be used to edit campaign scenarios directly or via a GUI interface, or can be used to generate new campaign XML filer which define the campaign. When the campaign is satisfactorily configured, a request to a deployer servlet **262** is made to deploy the actual campaign. The deploy function uses deployment configuration information to determine which deployer helper type **264** to use, if many exist. The campaign is then deployed to the campaign service **266.** At any subsequent point in time, the campaign **268** can be automatically or manually activated by a bootstrap rule or routine and then can be used by the system in personalizing content.

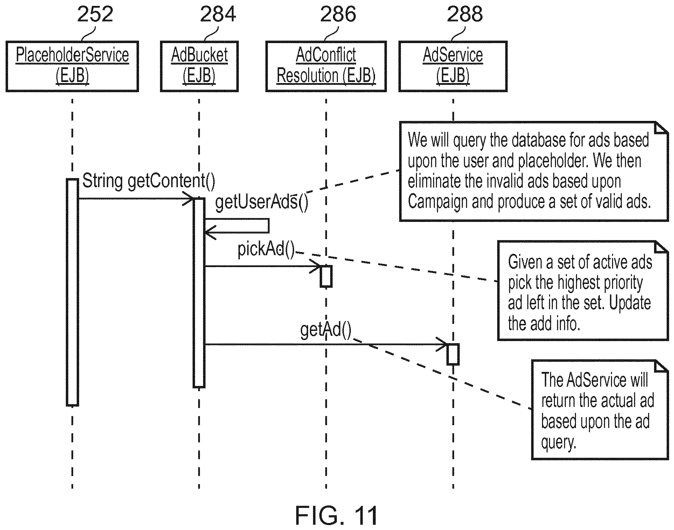

**Figure 11** illustrates a lifecycle in which the placeholder service EJB **252** uses an ad bucket EJB **284,** and ad conflict resolution EJB **286** in order to provide ads to the user. As shown in **Figure 11****,** the "get content" call to ad bucket EJB **284** is used to get a selection of ads from the database based upon the user's current information, profile, or session and the ad placeholder. The system then eliminates invalid ads based upon the campaign rules and produces a set of valid ads for communication to the user. If necessary, an ad conflict resolution EJB **286** is used to pick ads of the highest priority. The get ad method then returns the actual ad to the ad service **288** based upon the results of the ad query.

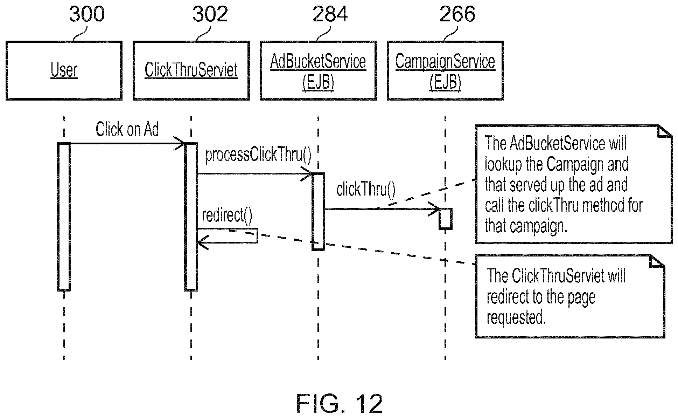

**Figure 12** illustrates a click through servlet lifecycle, showing how the user **300,** upon clicking on a particular ad sends a method to the click through servlet **302.** The click through servlet contacts an ad bucket service **284** that uses the campaign service **266** that looks up the campaign that served the ad and calls the appropriate click through method for that campaign. The ad bucket service is then used to redirect the user based upon the click through.

### Behavioral Tracking

Some embodiments of the invention are particularly useful for tracking users actions on a Web-site, and for using this tracked information to modify the Web-site content accordingly. In order to track users' interactions with a website, a behavior tracking system can be used to store this data for future analysis. Generalizing the event mechanism involves two major tasks.

The event types must be decoupled and defined in terms of the context in which they will be used. Display events must be defined for a general page view, product view, and ad view. The same is true of ClickEvents. In addition, the definition of the other events must be sharpened and finalized; and,

The event service must be generalized in order to decouple the content of the events from the mechanism. In one embodiment all events are stored in a single database table. A single listener will receive an event from the event service and will pass that event to the single persister. The single persister will call a helper method to create an XML string that will be stored in the database; the data will then be stored in the single database table.

The events that can be tracked include:
SessionBeginEvent - Marks the beginning of any user's session. User does not have to be logged on for the user to be in a session. However, if a user is logged on, they still retain the same session ID they had prior to login. An anonymous user will have a session ID, but not have a user ID until they log on (authenticate). Generated when user's session begins.
SessionEndEvent - Marks the end of any user's session, regardless of whether that user has logged on. Generated either by session timeout or user logout.
SessionLoginEvent - Denotes that a user has authenticated. We assume we have user profile information access at this time. The same session ID the user had prior to logging in will be used. Generated when user supplies login information.
UserRegistrationEvent - Denotes when a new user has registered at a site. Generated when user successfully completes registration forms.
AddToCartEvent - Customer adds product to cart. Generated when customer adds a product to their shopping cart.
BuyEvent - Customer purchases product. Generated when customer enters checkout; one per product.
RemoveFromCartEvent - Customer removes product from cart. Generated when customer removes a product from their shopping cart.
RuleEvent - A rule has fired. Generated usually in the context of a scenario (see description above). However, rules may be fired independent of a scenario.
DisplayContentEvent - An image is displayed to screen, independent of a campaign. Generated when "tagged" content is shown.
ClickContentEvent - An image on the screen is clicked on, independent of a campaign. Generated when "tagged" content is clicked on.
DisplayProductEvent - A product is displayed on.the screen. Note that product is not tied to a campaign. Generated when "tagged" products are shown.
ClickProductEvent - A product on the screen is clicked on. Generated when "tagged" products are clicked on.
DisplayCampaignEvent - An image that relates to a campaign is displayed to screen. A scenario may have multiple displays associated with it. Generated when the campaign/scenario has specified that this particular content is relevant to the scenario and should be displayed while the scenario is active.
ClickCampaignEvent - An image that relates to a campaign is clicked on. A scenario may have multiple click events associated with it. Generated when the campaign/scenario has specified that this particular content is relevant to the scenario is clicked on.
CampaignUserActivityEvent - A generic event for capturing user activity within the context of a campaign. Used to log that a user was exposed to a particular campaign. Used if there was not a DisplayCampaignEvent or ClickCampaignEvent.

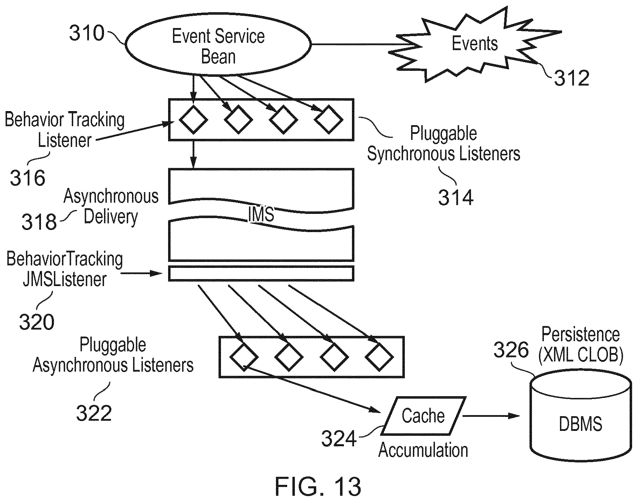

**Figure 13** illustrates one implementation of how an event system can be used to feed events to this system for use in personalizing content or business functions. As shown in **Figure 13****,** an event service bean **310** is used to feed notice of events **312** into one or more pluggable asynchronous listeners **314,** including in one embodiment of the system a behavioral tracking or listener module **316.** Each listener has a list of event types for which it listens. When the BehaviorTrackingJMSListener receives an event of that type (for example, foo), it transmits the event of type foo to every listener that lists foo in the String array returned from a getTypes() call on the listener (the call is invoked by the BehaviorTrackingJMSListener). The Java Messaging Service (JMS) **318** is used to deliver individual event messages to a JMS listener **320** and to a set of pluggable asynchronous listeners **322.** The listeners have no knowledge of JMS. For example, to plug in a listener interested only in campaign events, the listener's classname would have to be listed in a properties file as a behavior tracking listener, the listener must implement void handleEvent(Event e), and the listener's String] getTypes() call would need to return an array containing {"ClickCampaignEvent", "DisplayCampaignEvent", "CampaignUserActivityEvent"} Events, of one of these three types, would then arrive and be handled at the the listener's handleEvent(Event e) interface. The BehaviorTrackingJMSListener subscribes to the JMS topic to which events are transmitted from a synchronous, JMS-aware listener. It then sends events to the pluggable asynchronous listeners who are interested in events of certain types. The events may be cached **324** and then stored in a database (DBMS) **326** for use in generating content. It will be evident that other means for communicating events to the system can be used.

### The Event Table

In one embodiment the tracking event table structure uses a single table that facilitates storing data from all event types. This embodiment of the table has five columns as shown below, although alternate variations can be used:
- EVENT_ID
- EVENT_DATE
- EVENT_TYPE
- WLS_SESSION_ID
- USER_ID

### • XML_DEFINITION

The first five items are common to all types of events that are captured and stored in the database. The final item, XML_DEFINITION, represents an XML document that is stored as a CLOB in the table. XML_DEFINITION stores the first five items above and the event specific data that may differ between all of the event types. This XML document is created specifically for each event type.

### Administrative Tools and Editors

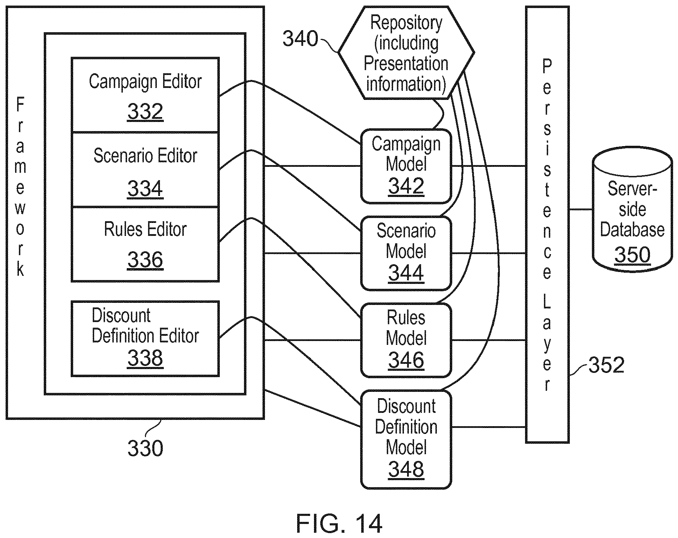

The administrative tools feature can be split into several main components. **Figure 14** illustrates one implementation of an administrative tool set, that allows an administrator to modify rules and/or campaign scenario rulesets, and also allows them to edit action types, including for example discount definitions that may be used with the invention. As shown in **Figure 14****,** the administrative software acts as a tool framework **330** and may include a campaign editor **332,** scenario editor **334,** rules editor **336,** and discount definition editor **338.** Other rule editors may be added as necessary. The editors are used to modify the system repository **340,** which includes data related to the campaign model **342,** scenario model **344,** rules model **346,** and discount definition model **348.** The repository is connected to a server side database **350** by a persistence layer **352** which allows data to be dynamically updated during the run-time execution of the personalization engine.

Editors - The actual widgets, icons, and other UI features that the administrator will be interacting with to create a campaign, scenario, ruleset, or discount definition. This is independent of any tools framework, keeping the editors as reusable as possible. The tools framework will create and listen to the models to facilitate the presentation inside a UI and persistence of the underlying objects. Editors also have access to a Repository object that contains information from the outside world such as list of presentation templates, available properties, etc.

Presentation - The information on how a campaign, scenario, or rule is displayed in readable and understandable form to a administrator. The presentation data is used by the Editor, and can be unique to a locale (or even to a business).

Model - The way the Editors interact with "the world". Each Editor's Model handles giving the Editor what it needs such as a DOM of data. The Model also listens for events on the DOM and possesses the appropriate mechanisms for firing its own events, listened to by the tools framework (to alert the need to save a ruleset, for example).

Tools framework - A surrounding infrastructure to house the specific Editors. The tools framework displays the lists of campaigns, scenarios, rulesets, and discount definitions. It also handles saving, loading and deleting of what is created within the Editors (via the Model and Persistence layer) through toolbars, menus, or other similar interfaces.

Data - The information about the actual rules, scenarios, campaigns, and other constructs edited within the tools. These pieces of Data live within a DOM (or DOMs) created from XML.

Persistence - How the Data is loaded into the Model and how it is saved after creation or editing in the Editors.

### Rules Editor

The Rules Editor is the foundation of most of the other administrator tools. Campaigns and scenarios are made up of rules (within rulesets). Thus, in order to edit the rules within the scenarios and campaigns, the Rule Editor must be used.

### Rulesets

When the Rules Editor is invoked, the "unit of work" is a ruleset. A ruleset is a collection of related rules, bundled so that the Rules Engine can use them together.

### Classifiers

The Classifiers ruleset is a special case. Because Classifications (perhaps the fact that the user is a "Gold Member", for example) need to be re-used in any campaign, scenario, or rule, having a single ruleset per application that stores all Classifications that are to be re-used makes life much easier (for us). Thus, there will be a special Classifier ruleset that contains only Classifier rules. Note the difference between a Classifier and a Classification. A Classifier is a rule type whose right-hand side asserts a Classification object. For example, in the Classifier "If the visitor's home state is Colorado, then classify the visitor as a Skiier", the classification "Skiier" would be what is reused in other rules. ("If the visitor is a skiier, then show the Vail Ad in the Left Ad Holder". A Classifier rule is not used within another rule - only a Classification.

### XML->HTML-like reader

The Model gives the Rules Editor a ruleset DOM to work with when the Rules Editor is started. When a rule within the ruleset is selected, the Rules Editor must be able to display the rule's Data contained within the ruleset DOM, as well as the Presentation information DOM necessary to show the rule properly. The Rules Editor needs to be able to turn both DOMs' information into a readable rule with hyperlinks for the parameterizable sections.

### Phrase Editors

When a hyperlink (parameterizable area) is clicked in a rule, the presentation DOM needs to know what phrase editor to open. A Phrase Editor is a dialogue used to get a specific value for use in the rule. For example, a date and time selector, or a property picker.

### Scenario Editor

The Scenario Editor edits a ruleset just as the Rules Editor does. The only difference between the two is that a Scenario is started from a template (an "Ad Scenario" template, for example), and the Scenario has a bit of metadata about it (a description, for example). In other words, most of the functionality (rules) used within the Scenario Editor is nested within the embedded Rules Editor. A Scenario is essentially a ruleset and some metadata. The scenario Data contains this metadata and a link to a ruleset. The Scenario Data also contains a link to the Classifier ruleset, so that Classifications created within the Classifier rules can be used within the Scenario's rules.

### Campaign Editor

The Campaign Editor can have multiple scenarios within it, as well as a ruleset of start and end conditions. There is also campaign metadata, such as a sponsor, a description, and searching information (start and end dates, etc). The Campaign Editor uses the Scenario Editor and the Rules Editor when it adds or modifies Scenarios. Campaign Data has links to every ruleset used within, including the Scenarios, the start/end condition ruleset and the Classifier ruleset.

### Discount Definition Editor

The Discount Definition Editor is only related to the Campaign, Scenario, and Rules Editors in that rules created within the Rules Editor can referto discounts created within the Discount Definition Editor (discounting type rules).

### Presentation

A Classifier such as "If the visitor's gender is male, then classify the visitor as a beer drinker" has not only Data such as "gender", "male", and "beer drinker", but also Presentation information about how a Classifier show be displayed ("If the visitor's..."). This Presentation information is stored outside of the Editors themselves, so that different Presentations can be plugged in for different uses (such as different locales or a specific Presentation for a business or vertical market).

### Schemas

For each Editor (Campaign, Scenario, Rules, and maybe Discount Definition), there is an XML schema governing how any Presentation XML for that Editor must be structured.

### Presentation XML

Given a schema, each Editor needs default Presentation XML. This includes rule text for every type of rule (Classifier, Content Selector, Placeholder Content Selector, Send E-mail, Discount), and display information (maybe just metadata names, maybe more) for scenarios and campaigns.

### Model

Each Editor, while knowing how to handle a specific kind of Data and Presentation DOM (campaign, ruleset, etc), should not necessarily have to do all transversal, update, and other activities with the DOM. Each Editor has an associated Model that handles much of the "grunt work", providing useful methods for the Editor.

### Convenience methods

The Model for each Editor provides convenience methods that the Editors can use to get or set values from the DOM. For example, a campaign Model might provide a method String getSponsor() that traverses the Data DOM to get the sponsor for a campaign.

### Events

Each Editor's Model also provides event listening and firing mechanisms so that it is the model's job to inform the tools framework of such things as the "dirtying" of data (meaning the Save button is enabled), based on events fired from the Editor.

### Repository

The Model for each Editor possesses a Repository of information relating to the Editor. The Repository may contain such information as template lists, and may also hold the reference to the Presentation DOM for each Editor.

### Tools Framework

The tools framework is the outer layer of the GUI, and houses the various Editors within. The tools framework is responsible for displaying the sets of campaigns, scenarios, rulesets, and discount definitions. The tools framework also performs saving, opening, and searching (Campaign lookup, for example) tasks. The tools framework never communicates directly to an Editor - it is always done through the Editor's Model.

### Data

The word "Data" in this document refers to the information the administrator user is trying to create, update, or delete by using the tools. Data could be a ruleset, a scenario, a campaign, or discount definition.

### Templates

The template concept is key for the administrator tools. By providing templates at each level (campaign, scenario, rule, and rule clause), the tools make it very easy for the administrator user to create quickly whatever they need to do. By making the templates pluggable (new templates can be created later on), a great deal of power and flexibility is provided.

A template is simply an unparameterized version of a scenario, campaign, or rule (or rule clause). A template provides basic structure, but the Editor should allow modification of a campaign, scenario, or rule started from a template into whatever the administrator user desires. For example, a user could start with an e-mail scenario template and by adding and removing rules, end up with a scenario that discounts a product and sends no e-mail at all.

### Discounts

Some embodiments of the invention allow a user, for example in a Web environment to offer discounts to certain customers. In these embodiments all discounts have unique identifiers. Through a scenario, it is possible to associate a discount to a user.

Discounting is a portion of the promotions functionality that honors monetary promotions extended to a customer by the campaign service, or possibly yet to be developed functionality. Discounting includes defining of discounts and applying those discounts through a pricing service that works on orders or shopping cart contents. Specifically the pricing service will apply a set of discounts to a set of products to maximize the monetary benefit to the customer. Many other services provided by the commerce server will interact with discounting functionality and therefore a number of dependencies and impacts on those services exist.

Customer - The browser-based user who interacts with the commerce site. Also includes computer systems that interact with the commerce site.

Developer - General term for any person operating, configuring, maintaining or developing on the commerce server.

Commerce Engineer, Commerce Manager-Advanced level developer with responsibility for managing the business functions.

Discount Tool - A tool for defining discounts.

Embodiments of the invention provides for a software facility deployed within the commerce server to facilitate providing discounts to customers. Discounts may be provided to all customers or to particular segments of customers. Discounts may always be in affect or may have conditionals that dictate when or underwhat circumstances the discount is available. In some embodiments, the system includes a dynamic pricing service which executes the discounts against a specific product or set of products to produce the cost of the product or products to the particular customer at the particular time. Although the promotions functionality (the presentation of an offer to the customer other than through the product catalog) is external to the discount system the dynamic pricing service can honor offers made through the promotions facility.

The discount system includes dependency and interoperability with the shopping cart, catalog, checkout and order management systems. The system can stand alone or allow third-party developers to provide there own integration of their catalog and order systems. Tools may be used to maintain discount definitions.

The discount system has two primary use cases. The first involves the developer interfacing with the discount configuration system. The second involves the customer interacting with the catalog, shopping cart, checkout and indirectly with the pricing service. A third use case exists where a developer interfaces to the pricing service to perform an unspecified task.

Embodiments of the invention provide a mechanism that allows the discount system to honor offers presented to customers through the promotion system. The mechanism is termed the discount indication mechanism.

The promotions facility makes all determinations based on user attributes whether a particular user discount applies to a user. After making this determination the promotions facility updates a discount indication mechanism with a user identifier and a discount identifier. The discount indication mechanism is referred to, in the rest of this specification, as the customer discount association.

The discount system provides customer targeted discounting of a qualification style. The basic premise of qualification discounting is that a discount definition describes the items (and in what quantity) required to qualify for a discount (qualifying items) and the items that are to receive the discount (target items). In general, the qualifying items may or may not be the same as the target items. For simplicity, in one embodiment, the qualifying and target items may be required to be the same set of items.

Application of discounts is done in the context of a collection of objects (order, shopping cart, etc.). When a discount is applied to the collection the set of objects matching the discount definition is removed from the collection and the target items are discounted per the discount definition. Additional discounts are applied until there are no more discounts, no more objects in the pool or no discounts that match the remaining collection objects. More specifically, the pricing service will apply the discounts to the given object collection in such a manner as to maximize the monetary savings to the customer.

The discount system may also provide a mechanism for associating sale discounts with particular product items or categories. Sale discounts can be applied prior to any qualification discounting.

### Additional Features

Additional features provided by various embodiments of the invention include those listed below. It will be evident to one skilled in the art that the following list is presented to illustrate the various features that can be used with the personalization system provided by the invention, and that many modifications and variations will be apparent within the scope of the invention as set out in the claims.
- Predictive modeling of a campaign based upon either historical data or current execution data.
- Tying campaign/scenario data analysis directly back into the campaign/scenario development environment.
- A scenario validation rule: This rule will take the same inputs as the base scenario rules, however its output will be a True or False identifier. True will indicate the user is valid for the scenario and the normal scenario rules should be executed. False will indicate the user is not valid for the scenario and nothing more will occur.
- Ad space inventory & scheduling (except indirectly through scenario usage).
- Advanced ad conflict resolution, including cross-placeholder resolution (i.e. two placeholders on the same page).
- Ad exposure limits.
- Email bounced handling.
- Guaranteed and verified email delivery.
- Email receipts.

The foregoing description of the present invention has been provided for the purposes of illustration and description. It is not intended to be exhaustive or to limit the invention to the precise forms disclosed. Obviously, many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims.

## Claims

1. A system for customizing the functionality of a software application in real-time, comprising:
a server (230), configured to allow a user to use a software application at the server, and to create a current session with the software application;
means adapted to provide a rule set (108) including a plurality of rules, wherein each rule defines actions to be taken by the software application in response to a particular event occurring within the current session, and wherein the rules are written in a portable schema format, wherein the schemas are parseable in real-time to permit real-time modification of the rules without system down-time,
means adapted to provide a scenario service (104, 136) for using the plurality of rules to determine the rules in effect for a particular scenario, wherein the particular scenario is a chain of rules and corresponding actions defining a flow of interactions between the user and the software application and includes metadata;
means adapted to provide an events service (240) for receiving notification of events from the software application when a user causes an event to occur in the current session, wherein the events describe the use by the user of the software application during the current session; and
means adapted to provide a rules engine (102) and configured to use the rules in the rule set and events received by the rules engine, when a user causes the events to occur in the current session, to select a scenario based on the received events, to determine actions to be taken by the software application, and to personalise in real-time the behaviour of the software application at the server for the user in the current session.

2. The system of claim 1 further comprising a rules repository for storing said rules.

3. The system of claim 2 wherein said rules are stored as XML documents within the rules repository.

4. The system of claim 1 wherein said rule set is updatable and wherein the system is configured to apply an updated rule set to the rules engine in real-time to effect real-time changes to the software application.

5. The system of claim 1 wherein a subset of said rules can be used to define a scenario of events to be understood by the software application.

6. The system of claim 5 wherein the system includes multiple scenarios, from which any one can be chosen by the rules engine based on the events received as input.

7. The system of claim 6 wherein a subset of scenarios form a campaign that can be understood by the software application.

8. The system of claim 7 wherein multiple campaigns exist.

9. The system of claim 1 wherein said software application is used to provide functionality for a web site.

10. The system of claim 9 wherein the rules can be used to determine the content of the web site.

11. The system of claim 9 wherein the rules can be used to determine a current access behavior of a customer of the web site.

12. The system of claim 9 wherein a series of the rules can be used to calculate a profile of a user of said web site in real-time.

13. A method for customizing the functionality of a software application in real-time, comprising:
allowing a user to use a software application at a server (230) and to create a current session with the software application;
providing a rule set (108) including a plurality of rules, wherein each rule defines actions to be taken by the software application in response to a particular event occurring within the current session, and wherein the rules are written in a portable schema format, wherein the schemas are parseable in real-time to permit real-time modification of the rules without system down-time,
providing a scenario service (104, 136) for using the plurality of rules to determine the rules in effect for a particular scenario, wherein the particular scenario is a chain of rules and corresponding actions defining a flow of interactions between the user and the software application and includes metadata;
an events service (240) receiving notification of events from the software application when a user causes an event to occur in the current session, wherein the events describe the use by the user of the software application during the current session; and
providing a rules engine (102) to use the rules in the rule set and events received by the rules engine, when a user causes the events to occur in the current session, to select a scenario based on the received events, to determine actions to be taken by the software application, and to personalise in real-time the behaviour of the software application at the server for the user in the current session.

14. The method of claim 13 further comprising storing said rules in a rules repository.

15. The method of claim 14 wherein said rules are stored as XML documents within the rules repository.

16. The method of claim 13 including updating said rules and applying said rules to the rules engine in real-time to effect real-time changes to the software application.

17. The method of claim 13 including using a subset of said rules to define a scenario of events to be understood by the software application.

18. The method of claim 17 wherein the method includes multiple scenarios, from which any one can be chosen by the rules engine based on the events received as input.

19. The method of claim 18 wherein a subset of scenarios form a campaign that can be understood by the software application.

20. The method of claim 19 wherein multiple campaigns exist.

21. The method of claim 20 wherein said software application is used to provide functionality for a web site.

22. The method of claim 21 wherein the rules can be used to determine the content of the web site.

23. The method of claim 21 wherein the rules can be used to determine a current access behavior of a customer of the web site.

24. The method of claim 21 wherein a series of the rules can be used to calculate a profile of a user of said web site in real-time.

## Patentansprüche

1. System zum Anpassen der Funktionalität einer Softwareanwendung in Echtzeit, umfassend:
einen Server (230), der ausgelegt ist, einem Benutzer zu ermöglichen, eine Softwareanwendung am Server zu verwenden und eine aktuelle Sitzung mit der Softwareanwendung herzustellen;
Mittel, das ausgelegt ist, einen Regelsatz (108) bereitzustellen, der eine Vielzahl von Regeln enthält, wobei jede Regel Handlungen definiert, die von der Softwareanwendung als Reaktion darauf zu tätigen sind, dass ein bestimmtes Ereignis innerhalb der aktuellen Sitzung eintritt, und wobei die Regeln in einem portablen Schema-Format geschrieben sind, wobei die Schemas in Echtzeit geparst werden können, um eine Echtzeitmodifikation der Regeln ohne Systemausfallzeit zu ermöglichen,
Mittel, das ausgelegt ist, um einen Szenariodienst (104, 136) zur Verwendung der Vielzahl von Regeln bereitzustellen, um die Regeln zu ermitteln, die für ein bestimmtes Szenario wirksam sind, wobei das bestimmte Szenario eine Kette aus Regeln und entsprechenden Handlungen ist, die einen Ablauf von Wechselwirkungen zwischen dem Benutzer und der Softwareanwendung definiert, und Metadaten enthält;
Mittel, das ausgelegt ist, einen Ereignisdienst (240) zum Empfangen einer Benachrichtigung über Ereignisse von der Softwareanwendung bereitzustellen, wenn ein Benutzer bewirkt, dass ein Ereignis in der aktuellen Sitzung eintritt, wobei die Ereignisse die Verwendung durch den Benutzer der Softwareanwendung während der aktuellen Sitzung beschreiben; und
Mittel, das ausgelegt ist, um eine Regelengine (102) bereitzustellen, und ausgelegt ist, die Regeln im Regelsatz und von der Regelengine empfangene Ereignisse zu verwenden, wenn ein Benutzer bewirkt, dass die Ereignisse in der aktuellen Sitzung eintreten, um ein Szenario auf Grundlage der empfangenen Ereignisse auszuwählen, um Handlungen zu ermitteln, die von der Softwareanwendung zu tätigen sind, und um das Verhalten der Softwareanwendung am Server für den Benutzer in der aktuellen Sitzung zu personalisieren.

2. System nach Anspruch 1, ferner umfassend einen Regelspeicher zum Speichern der Regeln.

3. System nach Anspruch 2, wobei die Regeln als XML-Dokumente innerhalb des Regelspeichers gespeichert sind.

4. System nach Anspruch 1, wobei der Regelsatz aktualisierbar ist und wobei das System ausgelegt ist, einen aktualisierten Regelsatz in Echtzeit auf die Regelengine anzuwenden, um Echtzeitänderungen an der Softwareanwendung zu bewirken.

5. System nach Anspruch 1, wobei eine Teilmenge der Regeln verwendet werden kann, um ein Szenario von Ereignissen zu definieren, das von der Softwareanwendung zu erfassen ist.

6. System nach Anspruch 5, wobei das System mehrere Szenarien enthält, aus denen eines von der Regelengine auf Grundlage der als Eingabe empfangenen Ereignisse ausgewählt werden kann.

7. System nach Anspruch 6, wobei eine Teilmenge von Szenarien eine Kampagne bildet, die von der Softwareanwendung erfasst werden kann.

8. System nach Anspruch 7, wobei es mehrere Kampagnen gibt.

9. System nach Anspruch 1, wobei die Softwareanwendung verwendet wird, um eine Funktionalität für eine Website bereitzustellen.

10. System nach Anspruch 9, wobei die Regeln verwendet werden können, um den Inhalt der Website zu ermitteln.

11. System nach Anspruch 9, wobei die Regeln verwendet werden können, ein aktuelles Zugriffsverhalten eines Kunden der Website zu ermitteln.

12. System nach Anspruch 9, wobei eine Reihe der Regeln verwendet werden kann, um ein Profil eines Benutzers der Website in Echtzeit zu berechnen.

13. Verfahren zum Anpassen der Funktionalität einer Softwareanwendung in Echtzeit, umfassend:
Ermöglichen, einem Benutzer, eine Softwareanwendung an einem Server (230) zu verwenden und eine aktuelle Sitzung mit der Softwareanwendung herzustellen;
Bereitstellen eines Regelsatzes (108), der eine Vielzahl von Regeln enthält, wobei jede Regel Handlungen definiert, die von der Softwareanwendung als Reaktion darauf zu tätigen sind, dass ein bestimmtes Ereignis innerhalb der aktuellen Sitzung eintritt, und wobei die Regeln in einem portablen Schema-Format geschrieben sind, wobei die Schemas in Echtzeit geparst werden können, um eine Echtzeitmodifikation der Regeln ohne Systemausfallzeit zu ermöglichen,
Bereitstellen eines Szenariodiensts (104, 136), zur Verwendung der Vielzahl von Regeln, um die Regeln zu ermitteln, die für ein bestimmtes Szenario wirksam sind, wobei das bestimmte Szenario eine Kette aus Regeln und entsprechenden Handlungen ist, die einen Ablauf von Wechselwirkungen zwischen dem Benutzer und der Softwareanwendung definiert, und Metadaten enthält;
einen Ereignisdienst (240), der eine Benachrichtigung über Ereignisse von der Softwareanwendung empfängt, wenn ein Benutzer bewirkt, dass ein Ereignis in der aktuellen Sitzung eintritt, wobei die Ereignisse die Verwendung durch den Benutzer der Softwareanwendung während der aktuellen Sitzung beschreiben; und
Bereitstellen einer Regelengine (102), um die Regeln im Regelsatz und von der Regelengine empfangene Ereignisse zu verwenden, wenn ein Benutzer bewirkt, dass die Ereignisse in der aktuellen Sitzung eintreten, um ein Szenario auf Grundlage der empfangenen Ereignisse auszuwählen, um Handlungen zu ermitteln, die von der Softwareanwendung zu tätigen sind, und um das Verhalten der Softwareanwendung am Server für den Benutzer in der aktuellen Sitzung zu personalisieren.

14. Verfahren nach Anspruch 13, ferner umfassend ein Speichern der Regeln in einem Regelspeicher.

15. Verfahren nach Anspruch 14, wobei die Regeln als XML-Dokumente innerhalb des Regelspeichers gespeichert sind.

16. Verfahren nach Anspruch 13, das ein Aktualisieren der Regeln und Anwenden der Regeln auf die Regelengine in Echtzeit enthält, um Echtzeitänderungen an der Softwareanwendung zu bewirken.

17. Verfahren nach Anspruch 13, enthaltend eine Verwendung einer Teilmenge der Regeln, um ein Szenario von Ereignissen zu definieren, das von der Softwareanwendung zu erfassen ist.

18. Verfahren nach Anspruch 17, wobei das Verfahren mehrere Szenarien enthält, aus denen eines von der Regelengine auf Grundlage der als Eingabe empfangenen Ereignisse ausgewählt werden kann.

19. Verfahren nach Anspruch 18, wobei eine Teilmenge von Szenarien eine Kampagne bildet, die von der Softwareanwendung erfasst werden kann.

20. Verfahren nach Anspruch 19, wobei es mehrere Kampagnen gibt.

21. Verfahren nach Anspruch 20, wobei die Softwareanwendung verwendet wird, um eine Funktionalität für eine Website bereitzustellen.

22. Verfahren nach Anspruch 21, wobei die Regeln verwendet werden können, um den Inhalt der Website zu ermitteln.

23. Verfahren nach Anspruch 21, wobei die Regeln verwendet werden können, ein aktuelles Zugriffsverhalten eines Kunden der Website zu ermitteln.

24. Verfahren nach Anspruch 21, wobei eine Reihe der Regeln verwendet werden kann, um ein Profil eines Benutzers der Website in Echtzeit zu berechnen.

## Revendications

1. Système pour personnaliser la fonctionnalité d'une application logicielle en temps réel, comprenant :
un serveur (230), configuré pour permettre à un utilisateur d'utiliser une application logicielle sur le serveur et de créer une session courante avec l'application logicielle ;
des moyens adaptés pour fournir un ensemble de règles (108) comprenant une pluralité de règles, où chaque règle définit des actions à prendre par l'application logicielle en réponse à un événement particulier survenant au cours de la session en cours, et où les règles sont écrites dans un format de schéma portable,
où les schémas sont analysables en temps réel pour permettre une modification en temps réel des règles sans interruption du système,
des moyens adaptés pour fournir un service de scénario (104, 136) pour utiliser la pluralité de règles pour déterminer les règles en vigueur pour un scénario particulier, où le scénario particulier est une chaîne de règles et d'actions correspondantes définissant un flux d'interactions entre l'utilisateur et l'application logicielle, et inclut des métadonnées ;
des moyens adaptés pour fournir un service d'événements (240) pour recevoir une notification d'événements provenant de l'application logicielle lorsqu'un utilisateur provoque la survenue d'un événement dans la session en cours, où les événements décrivent l'utilisation par l'utilisateur de l'application logicielle pendant la session en cours ; et
des moyens adaptés pour fournir un moteur de règles (102) et configurés pour utiliser les règles dans l'ensemble de règles et les événements reçus par le moteur de règles, lorsqu'un utilisateur provoque la survenue des événements dans la session en cours, pour sélectionner un scénario basé sur les événements reçus, pour déterminer les actions à prendre par l'application logicielle, et pour personnaliser en temps réel le comportement de l'application logicielle sur le serveur pour l'utilisateur pendant la session en cours.

2. Système selon la revendication 1, comprenant en outre un répertoire de règles pour stocker lesdites règles.

3. Système selon la revendication 2, dans lequel lesdites règles sont stockées sous la forme de documents XML dans le répertoire de règles.

4. Système selon la revendication 1, dans lequel ledit ensemble de règles peut être mis à jour, et dans lequel le système est configuré pour appliquer un ensemble de règles mis à jour au moteur de règles en temps réel pour effectuer des changements en temps réel au niveau de l'application logicielle.

5. Système selon la revendication 1, dans lequel un sous-ensemble desdites règles peut être utilisé pour définir un scénario d'événements devant être compris par l'application logicielle.

6. Système selon la revendication 5, dans lequel le système comprend plusieurs scénarios, parmi lesquels l'un quelconque peut être choisi par le moteur de règles sur la base des événements reçus en entrée.

7. Système selon la revendication 6, dans lequel un sous-ensemble de scénarios forme une campagne qui peut être comprise par l'application logicielle.

8. Système selon la revendication 7, dans lequel plusieurs campagnes existent.

9. Système selon la revendication 1, dans lequel ladite application logicielle est utilisée pour fournir une fonctionnalité à un site Web.

10. Système selon la revendication 9, dans lequel les règles peuvent être utilisées pour déterminer le contenu du site Web.

11. Système selon la revendication 9, dans lequel les règles peuvent être utilisées pour déterminer un comportement d'accès courant d'un client du site Web.

12. Système selon la revendication 9, dans lequel une série de règles peut être utilisée pour calculer un profil d'un utilisateur dudit site Web en temps réel.

13. Procédé pour personnaliser la fonctionnalité d'une application logicielle en temps réel, comprenant les étapes suivantes :
permettre à un utilisateur d'utiliser une application logicielle sur un serveur (230) et de créer une session courante avec l'application logicielle ;
fournir un ensemble de règles (108) comprenant une pluralité de règles, où chaque règle définit des actions à prendre par l'application logicielle en réponse à un événement particulier survenant au cours de la session en cours, et où les règles sont écrites dans un format de schéma portable, où les schémas sont analysables en temps réel pour permettre une modification en temps réel des règles sans interruption du système,
fournir un service de scénario (104, 136) pour utiliser la pluralité de règles pour déterminer les règles en vigueur pour un scénario particulier, où le scénario particulier est une chaîne de règles et d'actions correspondantes définissant un flux d'interactions entre l'utilisateur et l'application logicielle, et inclut des métadonnées ;
un service d'événements (240) recevant une notification d'événements provenant de l'application logicielle lorsqu'un utilisateur provoque la survenue d'un événement dans la session en cours, où les événements décrivent l'utilisation par l'utilisateur de l'application logicielle pendant la session en cours ; et
fournir un moteur de règles (102) pour utiliser les règles dans l'ensemble de règles et les événements reçus par le moteur de règles, lorsqu'un utilisateur provoque la survenue des événements dans la session en cours, pour sélectionner un scénario basé sur les événements reçus, pour déterminer les actions à prendre par l'application logicielle, et pour personnaliser en temps réel le comportement de l'application logicielle sur le serveur pour l'utilisateur pendant la session en cours.

14. Procédé selon la revendication 13, comprenant en outre le stockage desdites règles dans un répertoire de règles.

15. Procédé selon la revendication 14, dans lequel lesdites règles sont stockées sous la forme de documents XML dans le répertoire de règles.

16. Procédé selon la revendication 13, comprenant de mettre à jour lesdites règles et d'appliquer lesdites règles au moteur de règles en temps réel pour effectuer des changements en temps réel au niveau de l'application logicielle.

17. Procédé selon la revendication 13, comprenant d'utiliser un sous-ensemble desdites règles pour définir un scénario d'événements devant être compris par l'application logicielle.

18. Procédé selon la revendication 17, dans lequel le procédé comprend plusieurs scénarios, parmi lesquels l'un quelconque peut être choisi par le moteur de règles sur la base des événements reçus en entrée.

19. Procédé selon la revendication 18, dans lequel un sous-ensemble de scénarios forme une campagne qui peut être comprise par l'application logicielle.

20. Procédé selon la revendication 19, dans lequel plusieurs campagnes existent.

21. Procédé selon la revendication 20, dans lequel ladite application logicielle est utilisée pour fournir une fonctionnalité à un site Web.

22. Procédé selon la revendication 21, dans lequel les règles peuvent être utilisées pour déterminer le contenu du site Web.

23. Procédé selon la revendication 21, dans lequel les règles peuvent être utilisées pour déterminer un comportement d'accès courant d'un client du site Web.

24. Procédé selon la revendication 21, dans lequel une série de règles peut être utilisée pour calculer un profil d'un utilisateur dudit site Web en temps réel.
